# EUROPEAN PATENT APPLICATION

(11) **EP 1 179 950 A2**
(43) Date of publication of application: **13.02.2002**
(21) Application number: 01119054.3
(22) Date of filing: 07.08.2001
(51) Int. Cl.: H04M 3/436, H04M 3/493, H04L 12/58

(54) **Communication control system using a telephone directory**

(30) Priority: 08.08.2000 JP 2000240065
(71) Applicant: NEC CORPORATION, Tokyo (JP)
(72) Inventor: Miyashita, Shigehiro, Minato-ku, Tokyo (JP)
(74) Representative: Glawe, Delfs, Moll

(57) **Abstract**

A communication control system including a directory server (130) which include a storage unit (140) and a communication control unit. The storage unit stores a replica of directory data of records, each of which includes data of a counter communication end. The communication control unit refers to the directory data replica to determine whether or not a connection of a communication request from the counter communication end to a mobile phone (110) is permitted, in response to a connection confirmation request which is generated in response to the communication request, and transmits a response indicative permission or non-permission of the connection of the communication request to the mobile phone.

## Description

### Background of the Invention

### 1. Field of the Invention

The present invention relates to a communication control system using a telephone directory management system which stores telephone directory data for a mobile phone.

### 2. Description of the Related Art

In these several years, the number of users of mobile phones is increasing explosively. Also, the mobile phone advances to have a high level of function, and generally has a telephone directory which can record many phone numbers and mail addresses.

The telephone directory can record data about many individuals and companies to hundreds or thousands matters in today. Also, this data contains a name, a phone number, a mail address or the like. The input of these items is rather complex but carried out by operating buttons of the mobile phone, and kanji can be typed using a Japanese kana - kanji converter function. In this way, the data recorded in the telephone directory (to be referred to as "telephone directory data" hereinafter) becomes essential to use the mobile phone and the importance is rising.

Some improvements are proposed to improve usability of the telephone directory data of such a mobile phone more. For example, a "radio communication apparatus" is disclosed in Japanese Laid Open Patent application (JP-A-Heisei 11-191816), in which a telephone directory database on an existing personal computer communication network is accessed so that a desired phone number can be retrieved. Thus, the service, i.e., the retrieval of the phone number in this example provided by the personal computer communication network can be used without starting up a specific communication software for connecting with the personal computer communication network.

However, the first problem about the telephone directory data of such a mobile phone is in that the above-mentioned complex entry operation must be carried again to use the telephone directory data, when the telephone directory data of the mobile phone is lost in carelessness of the user and when the model of the mobile phone is changed. In such a case, a method is proposed in which the telephone directory data are stored previously in another place and downloaded to the mobile phone according to need.

Also, for example, a "method of registering telephone directory data, communication terminal and recording medium" is disclosed in Japanese Laid Open Patent application (JP-A-2000-124985), in which the telephone directory data is uploaded into a center on the Internet from a personal computer and the telephone directory data is transmitted from the center to the mobile phone in response to a request from the mobile phone. In this method, however, the personal computer is necessary and a user who does not have such a personal computer cannot easily uses the method.

Also, an "electronic mail system and method for the same" is disclosed in Japanese Laid Open Patent application (JP-A-Heisei 11-136280), in which an electronic mail address directory data which is used by the user on a personal computer is stored in a server on a network like the Internet, and a desired mail address can be acquired by accessing the mail address directory data when the user transmits an electronic mail. However, this system is devised for sharing the electronic mail addresses and cannot be used for the telephone directory data of the mobile phone.

The second problem is in that permission or non-permission of the call reception is determined after a call is actually received by the mobile phone. The present mobile phone generally has a function to refuse call reception, when there is a call from a phone number which is registered on the telephone directory data to refuse the call reception.

If there is a telephone directory data in a switching apparatus and a mobile phone network, it is possible to determine whether or not call reception is permitted, without using resources in a communication path to a destination mobile phone and a base station. The wasteful use of such resources is few if only one mobile phone exists. However, because a few millions of mobile phones become popular, the whole loss becomes enormous so that the bandwidth usable by other mobile phones is narrowed.

The third problem is in that the reception of an electronic mail cannot be refused in the mobile phone although call reception can be refused in the telephone. At present, in the mobile phone, the electronic mails of various forms can be used.
However, the function to refuse reception of an electronic mail from a mail address previously registered is provided nowhere on the communication path including the mobile phone itself.

In the system disclosed in the above-mentioned Japanese Laid Open Patent application (JP-A-Heisei 11-136280), the mail address used by the user is stored on the server on the network but a function to refuse the reception of an electronic mail cannot be provided using the mail address.

In conjunction with the above description, a telephone directory data transmission system is disclosed in Japanese Laid Open Patent Application (JP-A-Heisei 10-262122). The telephone directory data transmission system carries out transmission and reception of telephone directory data in which phone numbers are written. A general telephone is composed of a telephone directory data registering and managing tool which registers and manages telephone directory data, and a telephone directory data transmitting section which carries out the transfer control of the telephone directory data. A mobile phone is composed of a transmission request section which generates a transmission request to the general telephone, a telephone directory data transfer request section which transmits the telephone directory data transfer request to the general telephone after the generation of the transmission request, and a telephone directory data display control section which receives and displays the telephone directory data from the general telephone.

Also, a data managing apparatus is disclosed in Japanese Laid Open Patent Application (P2000-78628A). In this reference, a data managing apparatus is connected with a telephone switching apparatus through a communication terminal apparatus. The data managing apparatus is composed of an electronic telephone directory which has a function to store a set of a phone number and a name at least and to search a desired phone number, a communication history table which automatically records a communication history data for every time of transmission communication and call reception communication, and a registering section which transfers the communication history data registered on the communication history table on the electron telephone directory.

### Summary of the Invention

Therefore, an object of the present invention is to provide a communication control system using a directory managing system, wherein the reception of a call request or an electric mail can be permitted or refused.

Another object of the present invention is to provide a directory managing system, in which a directory data can be managed by uploading a small amount of data to a server.

Still another object of the present invention is to provide a directory managing system, in which a directory data can be restored by downloading from a server.

In an aspect of the present invention, a communication control system including a directory server which include a storage unit and a communication control unit. The storage unit stores a replica of directory data of records, each of which includes data of a counter communication end. The communication control unit refers to the directory data replica to determine whether or not a connection of a communication request from the counter communication end to the mobile phone is permitted, in response to a connection confirmation request which is generated in response to the communication request, and transmits a response indicative permission or non-permission of the connection of the communication request to the mobile phone.

The mobile phone includes a storage unit, an operation section and a transmitting section. The storage unit stores the directory data of records, each of which contains at least one of a name, phone number and electronic mail address of the counter communication end. The operation section generates an upload instruction in response to an operation by a user of the mobile phone. The transmitting section transmits the directory data to the directory server in response to the upload instruction such that the directory data is stored as a part of the directory data replica in the directory server. In this case, a group of ones of the records has an edit flag, and the mobile phone may further include an editing section which edits the group of records of the directory data in response to an operation by the user, and sets the edit flag. The transmitting section transmits the records of the groups with the set edit flags of the directory data to the directory server in response to the upload instruction such that the directory data of records with the set edit flags is stored as the part of the directory data replica in the directory server. Here, the number of records in each group is one.

Also, the mobile phone may include a storage unit, an operation section, a transmitting section and a receiving section. The operation section generates a download instruction in response to an operation by a user of the mobile phone. The transmitting section transmits the download instruction to the directory server. The receiving section receives as the directory data, a part of the directory data replica of records which are read out from the storage unit of the directory server in response to the download instruction, wherein each of the records contains at least one of a name, phone number and electronic mail address of the counter communication end.

Also, the communication request is a phone call, and each of the records includes the phone number of the counter communication end and further includes a non-permission flag set when the mobile phone should not be connected to the counter communication end and reset when the mobile phone should be connected to the counter communication end. The communication control system may further include a switching apparatus which generates the connection confirmation request to the directory server in response to the phone call, and connects the phone call to the mobile phone when receiving the permission response, and discards the phone call to the mobile phone when receiving the non-permission response. The directory server refers to the directory data replica to determine whether the non-permission flag corresponding to the phone number of the counter communication end is set or reset, transmits the permission response to the switching apparatus when the non-permission flag is reset, and transmits the non-permission response to the switching apparatus when the non-permission flag is set.

Also, the communication request is an electronic mail, and each of the records includes the electronic mail address of the counter communication end and further includes a non-permission flag set when the electronic mail should not be delivered to the mobile phone and reset when the electronic mail should be delivered to the mobile phone. The communication control system may further include a mail server which generates the connection confirmation request to the directory server in response to the electronic mail, and delivers the electronic mail to the mobile phone when receiving the permission response, and discards the electronic mail to the mobile phone when receiving the non-permission response. The directory server refers to the directory data replica to determine whether the non-permission flag corresponding to the electronic mail address of the counter communication end is set or reset, transmits the permission response to the mail server when the non-permission flag is reset, and transmits the non-permission response to the mail server when the non-permission flag is set.

In another aspect of the present invention, a communication control method may be attained by (a) generating a connection confirmation request in response to a communication request; by (b) referring to a directory data replica to determine whether or not a connection of a communication request from the counter communication end to the mobile phone is permitted, each of records of the directory data replica including data of a counter communication end; and by (c) transmitting a response indicative permission or non-permission of the connection of the communication request to the mobile phone based on whether or not the connection of the communication request from the counter communication end to the mobile phone is permitted.

Here, each of records of directory data may contain at least one of a name, phone number and electronic mail address of the counter communication end. The communication control method may further include the steps of: generating an upload instruction in response to an operation by a user of the mobile phone; and transmitting the directory data as a part of the directory data replica in response to the upload instruction. In this case, a group of ones of the records may have an edit flag. The communication control method further include the steps of: editing the group of records of the directory data in response to an operation by the user; setting the edit flag; and transmitting the records of the groups with the set edit flags of the directory data as the part of the directory data replica in response to the upload instruction. In this case, the number of records in each group may be one.

Also, the communication control method may include the steps of: generating a download instruction in response to an operation by a user of the mobile phone; and holding a part of the directory data replica of records as the directory data.

Also, the communication request may be a phone call, and each of the records may include the phone number of the counter communication end and further includes a non-permission flag set when the mobile phone should not be connected to the counter communication end and reset when the mobile phone should be connected to the counter communication end. The (a) generating step may be attained by generating the connection confirmation request in response to the phone call, and the (b) referring step may be attained by referring to the directory data replica to determine whether the non-permission flag corresponding to the phone number of the counter communication end is set or reset. The (c) transmitting step may be attained by generating the permission response when the non-permission flag is reset; by connecting the phone call to the mobile phone in response to the permission response; by generating the non-permission response to the switching apparatus when the non-permission flag is set; and by discarding the phone call to the mobile phone in response to the non-permission response.

Also, the communication request may be an electronic mail, and each of the records may include the electronic mail address of the counter communication end and further includes a non-permission flag set when the electronic mail should not be delivered to the mobile phone and reset when the electronic mail should be delivered to the mobile phone. The (a) generating step may be attained by generating the connection confirmation request in response to the electronic mail, and the (b) referring step may be attained by referring to the directory data replica to determine whether the non-permission flag corresponding to the electronic mail address of the counter communication end is set or reset. The (c) transmitting step may be generating the permission response when the non-permission flag is reset; by delivering the electronic mail to the mobile phone in response to the permission response; by generating the non-permission response when the non-permission flag is set; and by discarding the electronic mail to the mobile phone in response to the non-permission response.

### Brief Description of the Drawings

Fig. 1 is a block diagram showing the configuration of a mobile phone used in a communication control system according to a first embodiment of the present invention;
Fig. 2 is a diagram showing an example of directory data recorded in a storage section in the mobile phone of Fig. 1;
Fig. 3 is a block diagram showing the configuration of the communication control system according to the first embodiment of the present invention;
Fig. 4 is a flow chart showing the operation of uploading of the directory data in the communication control system according to the first embodiment of the present invention;
Figs. 5A to 5C are diagrams showing a screen displayed on a display section of the mobile phone in the communication control system according to the first embodiment of the present invention;
Fig. 6 is a flow chart showing the operation of restoring of the directory data in the communication control system according to the first embodiment of the present invention;
Fig. 7 is a block diagram showing the communication control system according to a second embodiment of the present invention;
Fig. 8 is a flow chart showing the operation of permitting the reception of a call in the communication control system according to the second embodiment of the present invention;
Fig. 9 is a block diagram showing the communication control system according to a third embodiment of the present invention; and
Fig. 10 is a flow chart showing the operation of permitting the reception of an electric mail in the communication control system according to the third embodiment of the present invention.

### Description of the Preferred Embodiments

Hereinafter, a communication control system using a directory managing system of the present invention will be described with reference to the attached drawings.

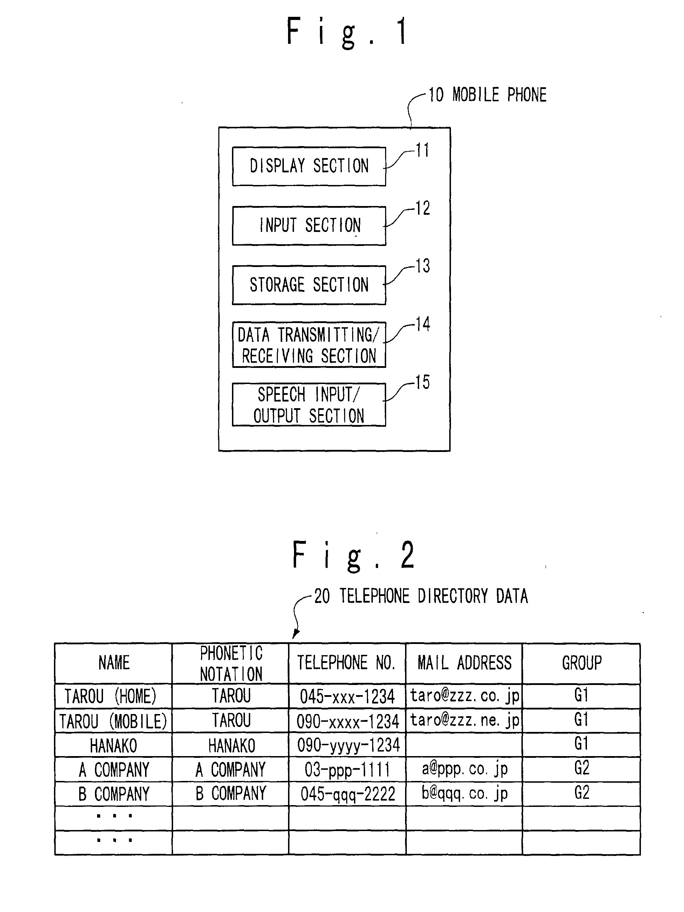

Fig. 1 is a functional block diagram showing a general structure of a mobile phone. The mobile phone 10 is composed of a display section 11, an input section 12, a storage section 13, a data transmitting and receiving section 14 a speech input/output section 15, and an editing section (not shown).

The display section 11 displays a directory data edit display to be described later, a communication state and various statuses of the mobile phone.

The input section 12 is composed of figure buttons from 0 to 9, a hook button, a menu display button, and a direction instruction button. The figure buttons are mainly used to input a phone number on calling. When a kanji name is registered on the telephone directory, these buttons are used in combination. Also, the direction instruction button is used for generation of a display movement instruction and operations such as a scrolling operation of items.

The storage section 13 is used to store data such as the telephone directory data, the status of the mobile phone, and sound data.

The data transmitting and receiving section 14 carries out a process of data modulation to data and transmits the modulated data from the mobile phone to a counter communication end via an antenna of the mobile phone and a base station (BS) connected with a mobile phone network. Oppositely, data is transmitted to the mobile phone in the route reverse to the above-mentioned route. The mobile phone receives the data by the data transmitting and receiving section 14 and carries out a demodulation process to the received data. When the data is speech data, a function like a conventional telephone is achieved.

In recent years, it is possible to transmit and receive the data other than the speech data, e.g., data containing character data, for example. Such character data is recorded in the storage section 13 and is displayed on the display section 11 according to need. A typical example of the transmitting and receiving of the character data in the mobile phone is electronic mail and a web.

The speech input/output section 15 is generally composed of a microphone as a speech input section and a speaker as an audio output section. These are used mainly in the case of conversation between users of mobile phones.

Next, referring to Fig. 2, directory data 20 stored in the storage section 13 will be described. The telephone directory data 20 has some data in accordance with a counter communication end, a phone number and an electric mail address. A typical example in which the telephone directory data 20 is used is that the mobile phone is called. The user of the mobile phone first controls the display section 11 to display a list of names registered on the directory data 20 and then specifies the counter communication end to be called using the direction instruction button. Next, the user operates the hook button (onhook) in this state so that a call is originated. In this way, the user can specify the phone number previously registered on the directory data 20 on the mobile phone with a single operation without striking the figure buttons.

An example of the directory data 20 is shown in Fig. 2. Here, the directory data 20 has records, and each record is composed of items such as a name, a Japanese phonetic notation, a phone number, a mail address, and a group. Therefore, when the directory data 20 are displayed, the directory data 20 can be displayed on the display section 11 in the order of Japanese phonetic notations of the names or for every group. Thus, the user usability can be improved. In the directory data 20 of Fig. 2, the group of friends is G1 and data about Tarou and Hanako are registered in the group G1. G2 is a group of companies and data about A Inc. and the B Inc. are registered.

An electric mail address is contained in the directory data 20, and when the item "electronic mail creating" is selected from among menu items after the counter communication end is specified on the display section 11, an electronic mail edit screen is displayed. Various items may be contained in the directory data 20 in addition to the items shown in Fig. 2.

Next, the first embodiment of the present invention will be described below. In the first embodiment of the present invention, the directory data of the mobile phone is stored in a server on a mobile phone network and is restored from there in case of the model change and the fault.

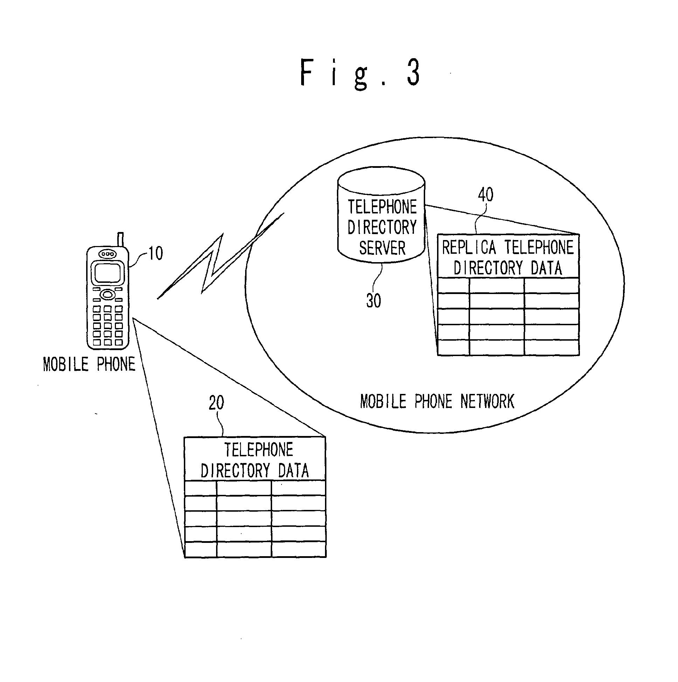

The structure of the first embodiment of the present invention will be described, with reference to Fig. 3. The first embodiment of the present invention is composed of the mobile phone 10 of the user, the directory data 20 stored in the storage section 13 of the mobile phone, and a the telephone directory server 30 installed in a phone network provided by a mobile phone service provider. The server 30 is composed of a storage unit which stores a replica 40 of the directory data for every user, and a communication control unit (not shown) which stores the directory data in the storage unit.

The mobile phone 10 is a mobile phone which has a data communication function as shown in Fig. 1. The mobile phone 10 has the directory data 20 therein. The user can edit the contents of the directory data 20 freely using the function of the editing section or by connecting the mobile phone to equipment such as an external personal computer with cables. As shown in Fig. 2, the directory data 20 stores hundreds or thousands records of individuals and companies and each record is composed of a name and phone number of a counter communication end.

The telephone directory server 30 is installed in the phone network provided by the mobile phone service provider and stores and manages the replica 40 of directory data. The telephone directory data replica 40 contains the telephone directory data 20 for every user.

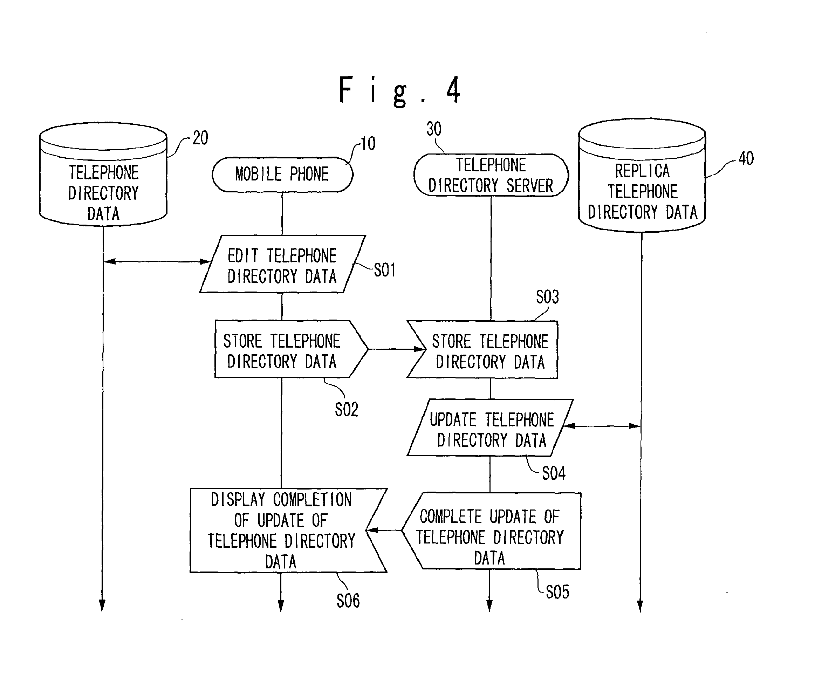

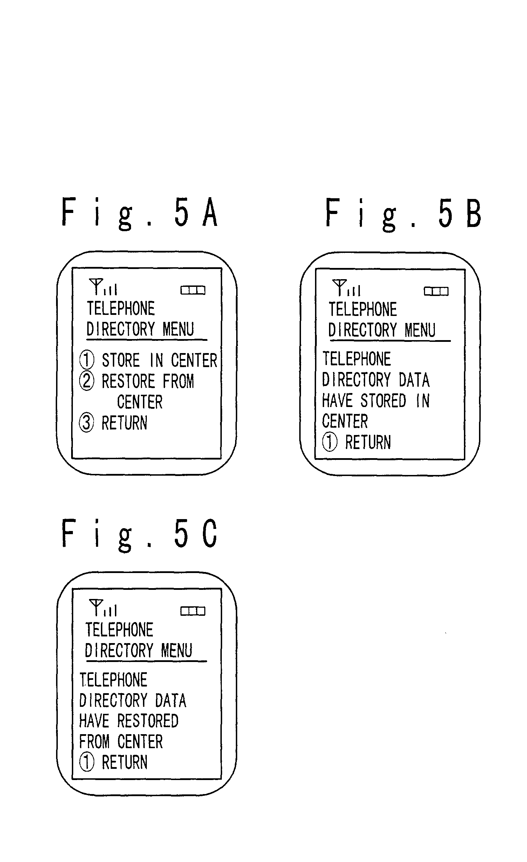

Next, the operation of the communication control system in the first embodiment will be described below in detail with reference to Fig. 4 and Figs. 5A to 5C.

The user edits the directory data 20 in his mobile phone 10 using the edit section through directory edit display displayed on the display section 11 (Step S01 of Fig. 4). The user edits each item displayed on a telephone directory edit display using the input section such as the buttons.

Next, the user instructs to store the directory data 20 from the telephone directory management screen for storing the edited directory data 20 in the telephone directory server 30 provided by the mobile phone service provider (Step S02). Through these operations, the mobile phone 10 carries out a predetermined change process to the directory data 20 and then transmits to the telephone directory server 30 via the antenna and the base station. In this case, the display contents of the telephone directory management screen displayed on the display section 11 of the mobile phone 10 are shown in Fig. 5A. When the user specifies a menu item, "① storing in center", using the direction instruction button, a transmitting process of the directory data 20 to the center is started.

The communication control unit of the telephone directory server 30 receives the telephone directory data 20 (Step S03) and stores in a position of the directory data replica 40 corresponding to the user (Step S04). The directory data replica 40 stores the contents of the directory data 20 every user, as mentioned above. The transfer of the directory data 20 is generally carried out using the packet telecommunication protocol of WAP (Wireless Application Protocol) but may be carried out using another standard protocol or a personal protocol.

If the update of the directory data replica 40 completes, the telephone directory server 30 notifies to the mobile phone 10, that the update of the data has been complete (Step S05).

Next, the mobile phone 10 displays that the directory data 20 have been stored in the telephone directory server 30 (as a part of the directory data replica 40) in response to the notice from the server (Step S06). The contents of the directory management screen in this case are shown in Fig. 5B.

Also, in Fig. 2, in addition to the items of the above-mentioned directory data 20, the item of "update flag" may be provided. It is enough to transmit only the records with the update flag of 1 to the above-mentioned telephone directory server 30 when the update flag is set for 1 (on) in the editing of the directory data 20. Thus, only the edited records are transmitted so that an amount of transmission data can be suppressed to the minimum. It should be noted that when the records with the update flag of 1 are stored in the telephone directory server 30, all the update flag of the directory data 20 is set to 0 (off).

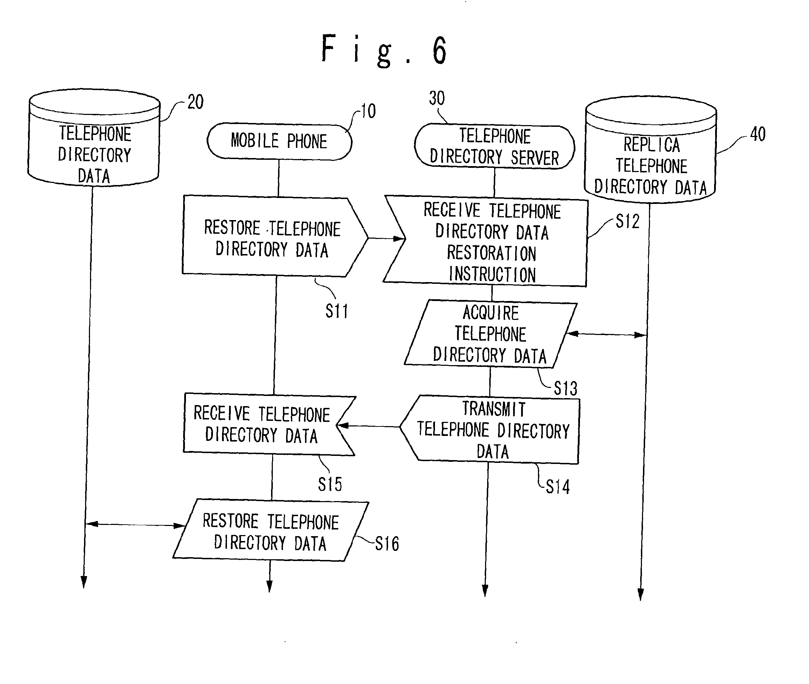

Next, the case where the telephone directory data 20 in the mobile phone 10 of the user is restored from the telephone directory server 30 provided by the mobile phone service provider will be described with reference to Figs. 5A to 5C and Fig. 6. The user instructs the telephone directory server 30 by the mobile phone 10 to restore the directory data 20 (Step S11 of Fig. 6). The display contents of the telephone directory management screen in this case are shown in Fig. 5A. When the user specifies an item, "② restore from the center", using the direction instruction button, restoration from the telephone directory server 30 is started.

When receiving the instruction from the mobile phone 10 (Step S12), the communication control unit of the telephone directory server 30 retrieves the directory data corresponding to the user from the directory data replica 40 (Step S13) and transmits it to the mobile phone 10 (Step S14). The used protocol may be the same the protocol as used for the storing of above-mentioned telephone directory data 20.

The mobile phone 10 receives the directory data 20 transmitted from the telephone directory server 30 (Step S15) and restores it (Step S16). It should be noted that the update flags of all records of the directory data 20 are set to 0.

When the restoration from the telephone directory data 30 completes in this way, a message shown in Fig. 5C is displayed in the telephone directory management screen displayed on the display section 11 to indicate that the restoration is completed.

In the first embodiment of the present invention as described above, the telephone directory server 30 is installed on the mobile phone network provided by the mobile phone service provider. However, the telephone directory server 30 may be installed on another network such as the Internet connected with the mobile phone network. In the case, the directory data 20 is transferred from the mobile phone via the mobile phone network to the network on which the telephone directory server 30 is provided.

However, when the telephone directory server 30 is installed on the mobile phone network as in the first embodiment of the present invention, the enhancement in the viewpoint of the security can be attempted not to provide a connection point with the outside and the mobile phone service provider has a merit that the provider can provide a new service in addition to the conventional service.

Also, the directory data replica 40 is the aggregate of the directory data 20 of many users. Therefore, when there is a request of restoration from one user using the phone number of the user, the directory data of the user must be identified from the directory data replica 40. In this case, when the user changes the service provider of the mobile phone, there is a problem that the phone number is different while being the same user, in case that the directory data 20 is downloaded into the new model. In this case, it is desirable to retrieve the directory data of the user from the directory data replica 40 by using a combination of the address and the name or preparing another identification.

Next, the second embodiment of the present invention will be described. In the second embodiment of the present invention, the directory data used in the mobile phone is stored in the telephone directory server on the mobile phone network. The communication control unit of the server determines whether a call from another telephone to the mobile phone should be refused.

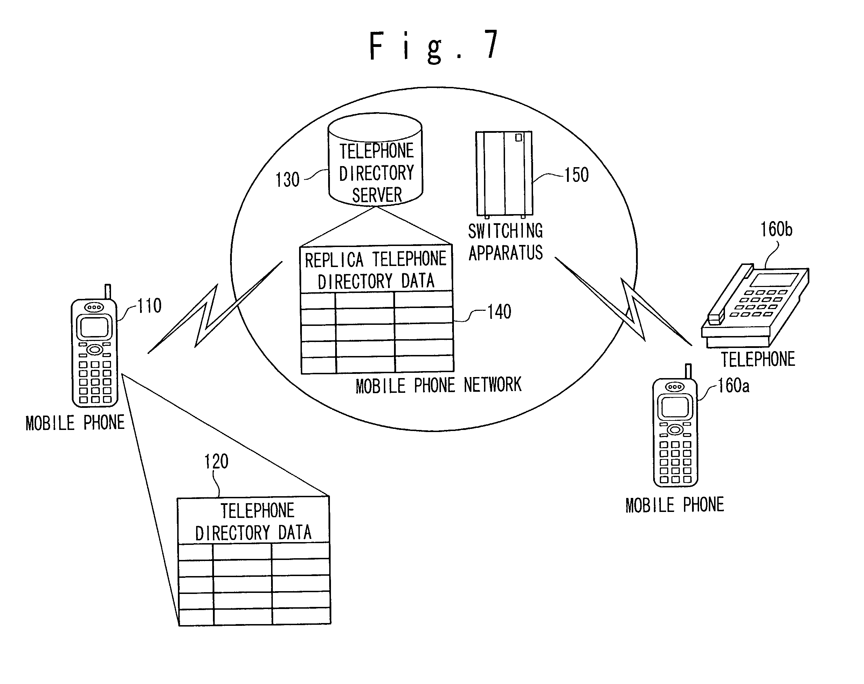

The structure of the second embodiment of the present invention will be described with reference to Fig. 7. The communication control system in the second embodiment of the present invention is composed of a mobile phone 110 of a user, directory data 120 in the mobile phone 110, a telephone directory server 130 installed on a phone network provided by a mobile phone service provider, a switching apparatus 150 which refers to the directory data replica 140 and manages an actual call, and the mobile phone 160a and a telephone 160b which call the mobile phone 110. The server 130 has a storage unit which stores a directory data replica 140 stored in the server, and the communication control unit (not shown).

The directory data 120 and the directory data replica 140 in the second embodiment correspond to the directory data 20 and the directory data replica 40 in the first embodiment, respectively. However, the call reception permission or non-permission flag indicating whether or not call reception should be permitted when there is a call from a counter communication end having a phone number (not shown). If the flag is 1 (on), the call reception from the counter communication end is accepted, and if being 0 (off), the call reception from the counter communication end is not accepted.

Also, the user can edit the directory data 120 of the mobile phone 110 to set to 0, the call reception permission or non-permission flag to the counter communication end which is not desired to receive a call. The edited directory data 120 are reflected in the directory data replica 140 as in the above-mentioned first embodiment of the present invention.

The mobile phone 110 and the telephone directory server 130 are like the above-mentioned first embodiment. However, the process of the above-mentioned call reception permission or non-permission flag is added.

When a call arrives from another mobile phone 160a or the telephone 160b, the switching apparatus 150 generally connects the call to the mobile phone 110 of the user. The mobile phone 160a is a usual mobile phone which has a number notice function regardless of the mobile phone service provider. Also, the telephone 160b is a telephone which has the number notice function and is other than a mobile phone, and which is installed in the home and connected to a public telephone network.

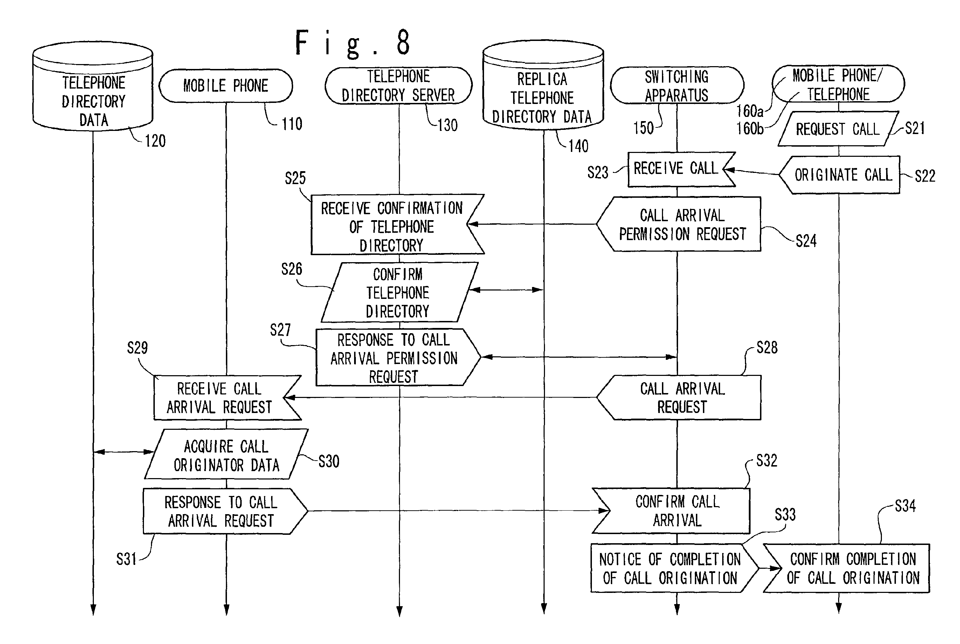

Next, the operation of the second embodiment will be described in detail with reference to Fig. 8.

First, when dialing is carried out from the mobile phone 160a or the telephone 160b to the mobile phone 110 of the user (Step S21 of Fig. 8), an originated call request is transmitted to the switching apparatus 150 (Step S22). When receiving the request (Step S23), the switching apparatus 150 requires the confirmation of whether or not the call from the phone 160a or 160b should be accepted, to the telephone directory server 130 installed on the phone network of the mobile phone service provider (Step S24).

Next, the communication control unit of the telephone directory server 130 receives the request (Step S25), searches the directory data replica 140 and determines whether or not the call reception is permitted (Step S26). More specifically, a record is specified of the directory data replica 140 corresponding to the phone number of the call originating phone and it determines whether the call reception permission or non-permission flag of the record is 1 or 0. The call reception is permitted if the flag is 1 and refused if the flag is 0.

When the call reception is determined to be permitted, this determination result is returned to the switching apparatus 150 (Step S27), and the switching apparatus 150 requests the call reception to the mobile phone 110 when receiving the determination result of permission (Step S28).

Next, the mobile phone 110 receives the request (Step S29), acquires (Step S30) data about the call originator from the directory data 120, sounds a call reception sound according to it and displays a name of the call originator on the screen (Step S31).

When the user accepts the call (Step S32), the switching apparatus 150 (Step S33) receives a response, and transmits a sound signal to the call originating mobile phone 160a or telephone 160b to notify that the call is accepted. The same control as usual call control in the phone is carried out.

When the flag is set in the directory data 120 of the mobile phone 110 of the user not to accept the call from the counter communication end, the content is reflected to the directory data replica 140. Therefore, at Step S27, the communication control unit of the telephone directory server 130 notifies the failure of the call reception to the switching apparatus 150. As the result, the communication control unit of the telephone directory server 130 notifies the failure of the call reception to the switching apparatus 150 at Step S34 by ringing a sound at the call originator, in place of a process of call reception permission of Steps s20 to S33.

When there is not the phone number of the call originator in the directory data 120 and the directory data replica 140, it is necessary to previously determine whether or not a call from the phone should be handled as call reception permission or refusal. In the present invention, which of them may be selected, and also may be set previously every user.

Also, like the first embodiment of the present invention, the directory server 130 is installed on the mobile phone network of the mobile phone service provider of the mobile phone. However, the telephone directory server 130 may be installed on another network connected with the mobile phone network like the Internet. However, as described in the first embodiment of the present invention, by installing the telephone directory server 130 on the mobile phone network, the enhancement in the security and the service of the mobile phone service provider are attained.

Next, the communication control system in the third embodiment of the present invention will be described. In the third embodiment, the directory data to be used in the mobile phone is stored in the server on the mobile phone network. Thus, permission or non-permission of the call reception of an electronic mail sent from another telephone or the personal computer to the mobile phone is determined.

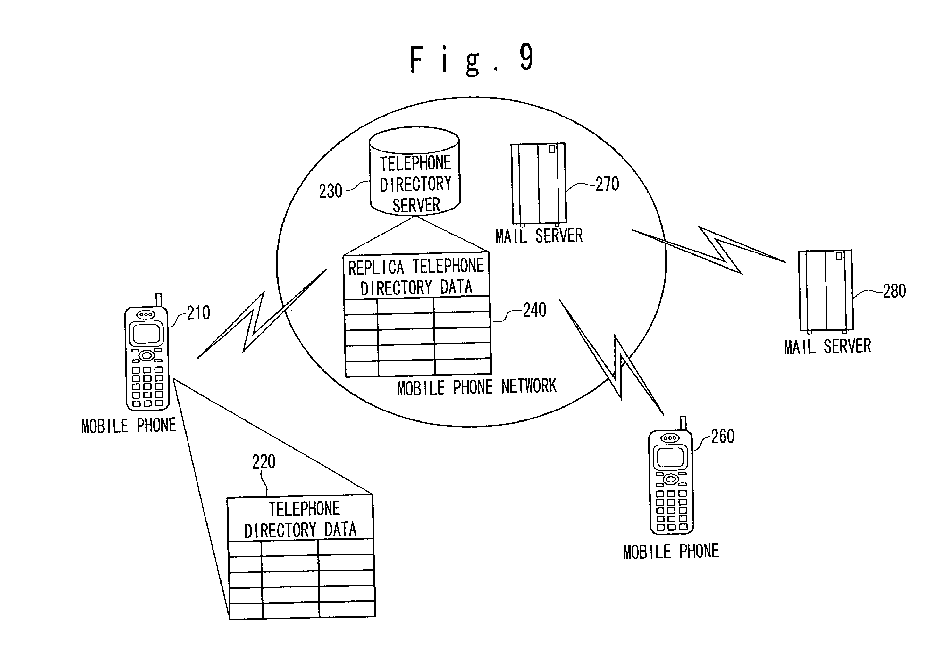

Referring to Fig. 9, the communication control system according to the third embodiment of the present invention, is composed of a mobile phone 210 of a user having a directory data 220 therein, a telephone directory server 230 installed on the phone network provided by the mobile phone service provider, a directory data replica 240 stored in the server, a mail server 270 which refers to the directory data replica 240 and manages an actual electronic mail delivery, a mobile phone 260 accommodated in the same mobile phone service provider as the mobile phone 210 and transmitting an electronic mail to the mobile phone 210, and a mail server 280 installed a service provider except the mobile phone service provider. The server 230 is composed of a storage unit which stores a directory data replica 240, and a communication control unit (not shown).

The directory data 220 and the directory data replica 240 in the third embodiment correspond to the directory data 20 and the directory data replica 40 in the first embodiment, respectively. However, an electronic mail reception permission or non-permission flag (not shown) is provided as a new item to indicate whether or not the reception of the electronic mail should be permitted based on the mail address of the record corresponding to a counter communication end. If the flag is 1 (on), the electronic mail from the counter communication end is accepted, and if being 0 (off), the reception of the electronic mail from the counter communication end is refused.

Also, the user edits the directory data 220 of the mobile phone 210 and sets to 0, the electronic mail reception permission or non-permission flag to the mail transmitting phone, from which it is not desired to receive the electronic mail. The edited directory data 220 is reflected onto the directory data replica 240 based on the above-mentioned first embodiment of the present invention.

The mobile phone 210 and the telephone directory server 230 are basically same as those in the second embodiment about. However, as described above, the process of the electronic mail reception permission or non-permission flag is added.

When there is an electronic mail from another mail server 280 or the mobile phone 260 or an external unit to the mail address allocated to the mobile phone 210 of the user, the mail server 270 delivers the electronic mail to the mobile phone 210.

For convenience of the following description, it is described that an electronic mail to the mobile phone 210 is delivered by the mail server 270.
However, actually, there are various methods of receiving the electronic mail by the mobile phone. One is a download type such as a push type in which the electronic mail is downloaded uni-directionally from the mail server to the mobile phone and a pull type in which the mobile phone reads the electronic mail in the mail server. As another type, there is the Web electronic mail type, in which the mobile phone views the electronic mail in the mail server by a browser. Also, the electronic mail like a short mail is of a so-called direct transfer type in which the mail is transferred without passing through the mail server. The present invention can be applied to such an electronic mail by checking in the mobile phone network before transmitting to the destination mobile phone.

The mobile phone 260 is a mobile phone which has an electronic mail transmitter function and belongs to the mobile phone service provider to which the mobile phone 210 belongs. The mail server 280 is a mail server provided by another mobile phone service provider and an Internet provider and delivers an electronic mail to the mail server 270 on the mobile phone network of the mobile phone 210. The mail server 280 is generally arranged on the Internet and is connected with the mobile phone network of the mobile phone 210 by some method.

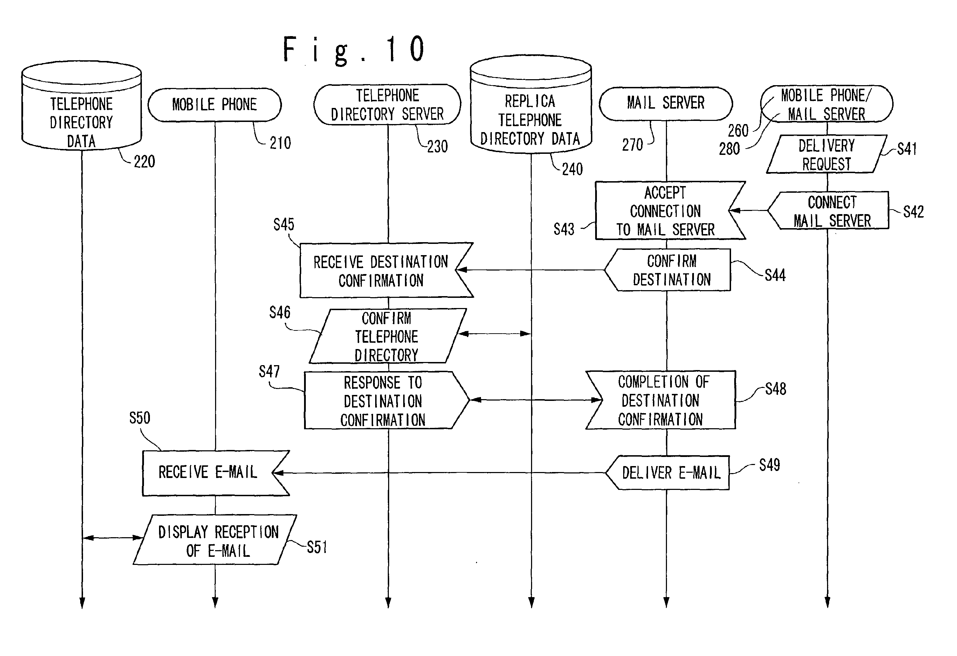

Next, the operation of the communication control system in the third embodiment will be described in detail with reference to Fig. 10.

The other mobile phone 260 and an external mail server 280 try to deliver an electronic mail to the mobile phone 210 of the user via the mail server 270 (Step S41 of Fig. 10) and try to connect to the mail server 270 (Step S42).

When receiving the connection (Step S43), the mail server 270 inquires the telephone directory server 230 to confirm whether or not the electronic mail is accepted (Step S44). The communication control unit of the telephone directory server 230 receives the inquiry (Step S45) and confirms whether or not an electronic mail address of a counter communication end as a mail transmission source of the electronic mail is recorded on the directory data replica 240. When the electronic mail address exists, the communication control unit of the telephone directory server 230 confirms a corresponding electronic mail reception permission or non-permission flag to determine whether or not the reception of the electronic mail from the counter communication end is permitted (Step S46).

As mentioned above, if the electronic mail reception permission or non-permission flag is 1, the delivery of the electronic mail is permitted and if being 0, the delivery is refused.

The determination result is returned to the mail server 270 (Step S48) and the arrival of the electronic mail is notified to the mobile phone 210 if the delivery of the electronic mail permitted (Steps S49, S50). The mobile phone 210 acquires data about the counter communication end from the directory data 220 and sounds a mail reception sound according to it and displays a name of the counter communication end on the screen (Step S51).

When the flag is set so as not to receive the electronic mail from the counter communication end, the mail server 270 notifies a delivery error to the mobile phone 260 or mail server 280 at Step S48.

When the address of the counter communication end of the electronic mail does not exist in the directory data 220 and the directory data replica 240 as the electronic mail address, it is necessary to previously determine whether the electronic mail reception should be permitted or refused. In the present invention, which of them may be selected, and also can be previously set every user.

Also, the telephone directory server 230 is installed on the mobile phone network of the mobile phone service provider of the mobile phone like the first and second embodiments of the present invention. However, the telephone directory server 230 may be installed on another network connected with the mobile phone network like the Internet. It should be noted that by installing the telephone directory server 230 on the mobile phone network like the first and second embodiments of the present invention, the enhancement of the security and service of the mobile phone service provider can be attempted.

Therefore, in the first embodiment of the present invention, the storage and restoration of the telephone directory data 20 are made possible.
Therefore, the original state can be promptly restored when user changes the model of the mobile phone or the telephone directory data is deleted through an erroneous operation. Also, in case of storage, only a change part of the telephone directory data 20 is transferred to the telephone directory server 30.
Therefore, the synchronization between the telephone directory data can be taken in a few transfer amounts of data and a little time.

Moreover, in the second embodiment of the present invention, the determination of the call reception permission or refusal which has been conventionally carried out on the side of the mobile phone can be carried out in the mobile phone network. Therefore, the load of the mobile phone is reduced and it is possible to reduce traffic between the mobile phone and the mobile phone network.

Also, the refusal of the unnecessary electronic mail which could not be conventionally realized in the mobile phone can be carried out in the mobile phone network. Therefore, the processing load of the mobile phone is reduced and it is possible to reduce traffic between the mobile phone and the mobile phone network.

## Claims

1. A communication control system comprising a directory server which comprises:
a storage unit (40) which stores a replica of directory data of records, each of which includes data of a counter communication end (160a, 160b); and
a communication control unit which refers to said directory data replica to determine whether or not a connection of a communication request from said counter communication end to a mobile phone (110) is permitted, in response to a connection confirmation request which is generated in response to said communication request, and transmits a response indicative permission or non-permission of the connection of said communication request to said mobile phone.

2. The communication control system according to claim 1, wherein said mobile phone comprises:
a storage unit (13) which stores said directory data of records, each of which contains at least one of a name, phone number and e-mail address of said counter communication end;
an operation section (12) which generates an upload instruction in response to an operation by a user of said mobile phone; and
a transmitting section (14) which transmits said directory data to said directory server in response to said upload instruction such that said directory data is stored as a part of said directory data replica in said directory server.

3. The communication control system according to claim 2, wherein a group of ones of the records has an edit flag,
said mobile phone further comprises:
an editing section which edits the group of records of said directory data in response to an operation by the user, and sets said edit flag, and
said transmitting section transmits the records of the groups with the set edit flags of said directory data to said directory server in response to said upload instruction such that said directory data of records with the set edit flags is stored as the part of said directory data replica in said directory server.

4. The communication control system according to claim 3, wherein the number of records in each group is one.

5. The communication control system according to any of claims 1 to 4, wherein said mobile phone comprises:
a storage unit (13);
an operation section (12) which generates a download instruction in response to an operation by a user of said mobile phone;
a transmitting section (14) which transmits said download instruction to said directory server; and
a receiving section (14) which receives as said directory data, a part of said directory data replica of records which are read out from said storage unit of said directory server in response to said download instruction, wherein each of the records contains at least one of a name, phone number and e-mail address of said counter communication end.

6. The communication control system according to any of claims 1 to 5, wherein said communication request is a phone call, and each of the records includes said phone number of said counter communication end and further includes a non-permission flag set when said mobile phone should not be connected to said counter communication end and reset when said mobile phone should be connected to said counter communication end,
said communication control system further comprises:
a switching apparatus (150) which generates said connection confirmation request to said directory server in response to said phone call, and connects said phone call to said mobile phone when receiving the permission response, and discards said phone call to said mobile phone when receiving the non-permission response, and
wherein said directory server refers to said directory data replica to determine whether said non-permission flag corresponding to said phone number of said counter communication end is set or reset, transmits said permission response to said switching apparatus when said non-permission flag is reset, and transmits said non-permission response to said switching apparatus when said non-permission flag is set.

7. The communication control system according to any of claims 1 to 6, wherein said communication request is an e-mail, and each of the records includes said e-mail address of said counter communication end and further includes a non-permission flag set when said e-mail should not be delivered to said mobile phone and reset when said e-mail should be delivered to said mobile phone,
said communication control system further comprises:
a mail server (270) which generates said connection confirmation request to said directory server in response to said e-mail, and delivers said e-mail to said mobile phone when receiving the permission response, and discards said e-mail to said mobile phone when receiving the non-permission response, and
wherein said directory server refers to said directory data replica to determine whether said non-permission flag corresponding to said e-mail address of said counter communication end is set or reset, transmits said permission response to said mail server when said non-permission flag is reset, and transmits said non-permission response to said mail server when said non-permission flag is set.

8. A mobile phone comprises:
a storage unit which stores directory data of records, each of which contains at least one of a name, phone number and e-mail address of a counter communication end;
an operation section which generates an upload instruction in response to an operation by a user of said mobile phone; and
a transmitting section which transmits said directory data to an external unit in response to said upload instruction.

9. The mobile phone according to claim 8, wherein a group of ones of the records has an edit flag,
said mobile phone further comprises:
an editing section which edits the group of records of said directory data in response to an operation by the user, and sets said edit flag, and
said transmitting section transmits the records of the groups with the set edit flags of said directory data to said directory server in response to said upload instruction such that said directory data of records with the set edit flags is stored as the part of said directory data replica in said directory server.

10. The mobile phone according to claim 9, wherein the number of records in each group is one.

11. The mobile phone according to any of claims 8 to 10, wherein said operation section generates a download instruction in response to an operation by a user of said mobile phone, and said transmitting section transmits said download instruction to said external unit, and
said mobile phone further comprises:
a receiving section which receives said directory data from said external unit in response to said download instruction.

12. A directory managing system comprises:
a directory server which stores a replica of directory data; and
a mobile phone which comprises:
a storage unit which stores said directory data of records, each of which contains at least one of a name, phone number and e-mail address of said counter communication end;
an operation section which generates an upload instruction in response to an operation by a user of said mobile phone; and
a transmitting section which transmits said directory data to said directory server in response to said upload instruction such that said directory data is stored as a part of said directory data replica in said directory server.

13. The directory managing system according to claim 12, wherein a group of ones of the records has an edit flag,
said mobile phone further comprises:
an editing section which edits the group of records of said directory data in response to an operation by the user, and sets said edit flag, and
said transmitting section transmits the records of the groups with the set edit flags of said directory data to said directory server in response to said upload instruction such that said directory data of records with the set edit flags is stored as the part of said directory data replica in said directory server.

14. The directory managing system according to claim 13, wherein the number of records in each group is one.

15. The directory managing system according to any of claims 12 to 14, wherein said operation section generates a download instruction in response to an operation by a user of said mobile phone, and said transmitting section transmits said download instruction to said directory server, and
said mobile phone further comprises:
a receiving section which receives as said directory data, a part of said directory data replica of records which are read out from said storage unit of said directory server in response to said download instruction, wherein each of the records contains at least one of a name, phone number and e-mail address of said counter communication end.

16. A communication control method comprising the steps of :
(a) generating a connection confirmation request in response to a communication request;
(b) referring to a directory data replica to determine whether or not a connection of a communication request from said counter communication end to said mobile phone is permitted, each of records of said directory data replica including data of a counter communication end; and
(c) transmitting a response indicative permission or non-permission of the connection of said communication request to said mobile phone based on whether or not the connection of said communication request from said counter communication end to said mobile phone is permitted.

17. The communication control method according to claim 16, wherein each of records of directory data contains at least one of a name, phone number and e-mail address of said counter communication end, and
said communication control method further comprises the steps of:
generating an upload instruction in response to an operation by a user of said mobile phone; and
transmitting said directory data as a part of said directory data replica in response to said upload instruction.

18. The communication control method according to claim 17, wherein a group of ones of the records has an edit flag,
said communication control method further comprises the steps of:
editing the group of records of said directory data in response to an operation by the user;
setting said edit flag; and
transmitting the records of the groups with the set edit flags of said directory data as the part of said directory data replica in response to said upload instruction.

19. The communication control method according to claim 18, wherein the number of records in each group is one.

20. The communication control method according to claim 16, further comprising the steps of:
generating a download instruction in response to an operation by a user of said mobile phone; and
holding a part of said directory data replica of records as said directory data.

21. The communication control method according to claim 16, wherein said communication request is a phone call, and each of the records includes said phone number of said counter communication end and further includes a non-permission flag set when said mobile phone should not be connected to said counter communication end and reset when said mobile phone should be connected to said counter communication end,
said (a) generating step comprises the step of:
generating said connection confirmation request in response to said phone call,
said (b) referring step comprises the steps of:
referring to said directory data replica to determine whether said non-permission flag corresponding to said phone number of said counter communication end is set or reset,
said (c) transmitting step comprises the steps of:
generating said permission response when said non-permission flag is reset;
connecting said phone call to said mobile phone in response to said permission response;
generating said non-permission response to said switching apparatus when said non-permission flag is set; and
discarding said phone call to said mobile phone in response to said non-permission response.

22. The communication control method according to claim 16, wherein said communication request is an e-mail, and each of the records includes said e-mail address of said counter communication end and further includes a non-permission flag set when said e-mail should not be delivered to said mobile phone and reset when said e-mail should be delivered to said mobile phone,
said (a) generating step comprises the step of:
generating said connection confirmation request in response to said e-mail,
said (b) referring step comprises the step of:
referring to said directory data replica to determine whether said non-permission flag corresponding to said e-mail address of said counter communication end is set or reset,
said (c) transmitting step comprises the steps of:
generating said permission response when said non-permission flag is reset;
delivering said e-mail to said mobile phone in response to said permission response;
generating said non-permission response when said non-permission flag is set; and
discarding said e-mail to said mobile phone in response to said non-permission response.
